(19) Europäisches Patentamt

European Patent Office

Office européen des brevets

(11) Veröffentlichungsnummer: **0 196 010 B1**

(12) **EUROPÄISCHE PATENTSCHRIFT**

(45) Veröffentlichungstag der Patentschrift: **30.09.92**

(21) Anmeldenummer: **86103733.1**

(22) Anmeldetag: **19.03.86**

(51) Int. Cl.⁵: **G03B 27/16**, G02B 27/02

(54) **Leuchtkasten.**

(30) Priorität: **23.03.85 DE 3510594**

(43) Veröffentlichungstag der Anmeldung:
**01.10.86 Patentblatt 86/40**

(45) Bekanntmachung des Hinweises auf die
Patenterteilung:
**30.09.92 Patentblatt 92/40**

(84) Benannte Vertragsstaaten:
**AT BE CH DE FR GB IT LI LU NL SE**

(56) Entgegenhaltungen:
**WO-A-82/04130**
**FR-A- 2 076 126**
**GB-A- 348 148**
**US-A- 4 385 462**

(73) Patentinhaber: **Hinrichs Fotowerbung GmbH
Raiffeisenstrasse 21
W-4504 Georgsmarienhütte(DE)**

(72) Erfinder: **Kramer, Heinz
Bramscher Strasse 179
W-4500 Osnabrück(DE)**

(74) Vertreter: **Busse & Busse Patentanwälte
Postfach 1226 Grosshandelsring 6
W-4500 Osnabrück(DE)**

## Beschreibung

Die Erfindung bezieht sich auf einen Leuchtkasten für Diapositive od.dgl. in einer Ausgestaltung nach dem Oberbegriff des Anspruchs 1.

Bei einem bekannten, ein- oder doppelseitigen Leuchtkasten ist für jede Gruppe von Trägerscheiben ein besonderer Stützrahmen vorgesehen, der jeweils frontseitig in den Außenrahmen einsetzbar und in diesem durch Schnellverschlüsse oder durch Schrauben festlegbar ist. Der Stützrahmen ist mehrteilig ausgebildet und muß für einen Diawechsel geöffnet und wieder geschlossen werden. Eine derartige Ausgestaltung ist verhältnismäßig kompliziert, kostenträchtig in der Herstellung, umständlich in der Handhabung bei einem Diawechsel, und nur bei Leuchtkästen mit eckiger Kontur verwirklichbar.

Der Erfindung liegt die Aufgabe zugrunde, einen besonders einfachen, preisgünstig herstellbaren Leuchtkasten der eingangs genannten Art zu schaffen, der bei sicherer Abstützung der Diaträgerscheiben einen schnellen und einfachen frontseitigen Diawechsel erlaubt.

Die Erfindung löst die Aufgabe ausgehend von einem Leuchtkasten der im Oberbegriff des Anspruchs 1 genannten Art in erster Linie durch die im kennzeichnenden Teil des Anspruchs 1 angegebenen Merkmale. Hinsichtlich wesentlicher weiterer Ausgestaltungen wird auf die Ansprüche 2 bis 9 verwiesen.

Der Leuchtkasten nach der Erfindung ist überaus einfach und preisgünstig sowohl aus Aluminium, als auch aus Kunststoff herstellbar.Die ein Diapositiv zwischen sich aufnehmenden Trägerscheiben sind jeweils frontseitig direkt in den Außenrahmen einsetzbar und werden durch die aufsteckbaren Abschlußprofilleisten einfach und sicher fixiert. Zu Diawechselzwecken können die Abschlußprofilleisten schnell und ohne Werkzeug gelöst werden. Sie bilden dabei zugleich ein jeweils frontseitiges Dekorelement, da der Abdeckteil ungeachtet seiner Funktion bei der Randabstützung der Trägerscheiben in vielfältiger Hinsicht zur Erzielung optischer Effekte gestaltbar ist.

Das in der Haltetasche vorgesehene Klemmprofilteil, das aus PVC, Polyäthylen oder irgendeinem sonst geeigneten, elastischen Werkstoff,z.B. auch Gummi, hergestellt sein kann, bildet ein Ausgleichselement bei Toleranzabweichungen und Formveränderungen des Leuchtkastens aufgrund von mechanischen oder thermischen Einflüssen und erhöht zugleich die Haltekraft, mit der der Steckteil der Abschlußprofilleiste in der Haltetasche festgelegt ist.

Weitere Einzelheiten und Vorteile der Erfindung ergeben sich aus der nachfolgenden Beschreibung und der Zeichnung, in der zwei Ausführungsbeispiele des Gegenstands der Erfindung näher veranschaulicht sind. Im einzelnen zeigen:

Fig. 1 einen abgebrochenen Schnitt durch einen einseitigen Leuchtkasten nach der Erfindung,

Fig. 2 eine Darstellung ähnlich Fig. 1 eines erfindungsgemäßen Leuchtkastens in dopoelseitiger Ausführung, und

Fig. 3 eine abgebrochene Ausschnittsvergrößerung eines Randbereiches des Querschnittsprofils des Außenrahmens.

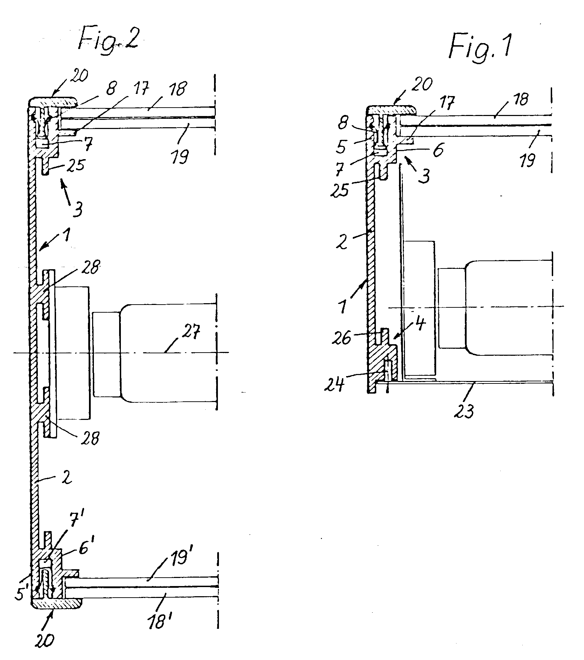

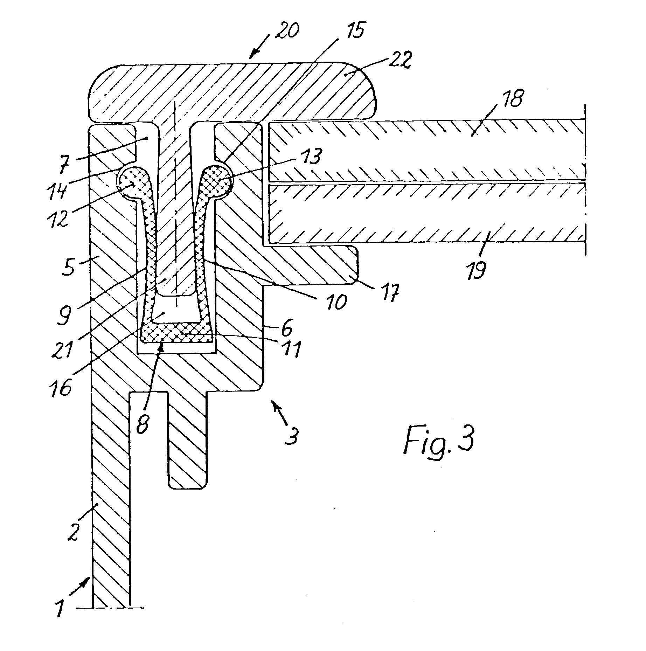

Der in Fig. 1 vernschaulichte einseitige Leuchtkasten besteht im wesentlichen aus einem Außenrahmen 1, der in der Regel aus einer Anzahl von aneinander-gesetzten Rahmenstreben aufgebaut ist. Der Außenrahmen 1 bzw. dessen Rahmenstreben oder -leisten hat ein Querschnittsprofil, das einen dünnen Wandteil 2 und an dessen Innenseite längslaufende Formansätze 3,4 umfaßt. Wie der Fig. 1 und insbesondere der Fig. 3 entnommen werden kann, begrenzt der vordere Längsrandbereich 5 des Wandteils 2 mit einem sich innenseitig längs diesem erstreckenden Winkelsteg 6 eine vorderseitig offene Haltetasche 7, in der ein Klemmprofilteil 8 aus elastischem Material, z.B. PVC oder Polyäthylen, angeordnet ist. Dieses Klemmprofilteil 8 kann sich als Leiste entlang der gesamten Länge der Haltetasche 7 erstrecken. Jedoch kann das Klemmprofilteil 8 auch die Gestalt von Abschnitten mehr oder weniger großer Länge haben, die mit gegenseitigem Abstand über die Länge der Haltetasche 7 verteilt in dieser angeordnet werden können.

Das Klemmprofilteil ist im Querschnitt annähernd U-förmig, besitzt einwärts gebogene Seitenschenkel 9,10 und einen Bodenschenkel 11. An der Außenseite der Seitenschenkel 9,10 und entlang deren freien Ränder ist das Klemmprofilteil 8 mit längslaufenden, im Querschnitt etwa halbkreisförmigen Rastansätzen 12,13 versehen, die in ihrerseits im Querschnitt etwa halbkreisförmigen Längsnuten 14,15 in den gegenüberliegenden Wänden der Haltetasche 7 eingreifen. Dadurch ist das Klemmprofilteil 8 in der Haltetasche 7 arretiert,ohne daß die verformbarkeit der Seitenschenkel 9,10 beeinträchtigt wird. Die Seitenschenkel 9,10 begrenzen zusammen mit dem Bodenschenkel 11 ihrerseits eine Tasche 16, deren lichter Querschnitt sich infolge der bogenförmigen Wölbung der Seitenschenkel 9,10 von der Eintrittsöffnung in Höhe der Rastansätze 12,13 zum Bodenschenkel 11 hin zunächst verengt und dann wieder erweitert.

Der sich parallel zum Wandteil 2 bzw. dessen Längswandbereich 5 erstreckende Schenkel des Winkelstegs 6 ist mit einem einwärts vorspringenden, längslaufenden Widerlagersteg 17 versehen, der das innere Widerlager für zwei Trägerscheiben 18, 19 bildet, zwischen denen ein nicht veranschaulichtes Diapositiv angeordnet wird. Die Trägerscheibe 19 bildet dabei in der Regel eine Streuscheibe und die Trägerscheibe 18 eine Klarscheibe.

Die Trägerscheiben 18,19 werden in ihrer Einbaustellung durch eine Abschlußprofilleiste 20 gehalten, die sich längs der gesamten Länge der Haltetasche 7, d.h. entlang der gesamten Umfangslänge des Außenrahmens 1 erstreckt. Die Abschlußprofilleiste 20 weist einen Steckteil 21 auf, der in die Tasche 16 im Klemmprofilteil 8 eingreift, wie dies die Fig. 3 besonders deutlich erkennen läßt. Der Steckteil 21 spreizt bei seinem Einführen in die Tasche 16 des Klemmprofilteils 8 die einwärts gewölbten Seitenschenkel 9,10 auf, die sich an den Steckteil 21 aufgrund der Verformung unter Druck anlegen. Der Steckteil 21 kann wie dargestellt eine vom Abdeckteil 22 zu seinem freien Ende hin ansteigende Dicke aufweisen, wodurch die Festlegung der Abdeckprofilleiste 20 verstärkt wird. Die maximale Dicke des Steckteils 21 an dessen freien Ende ist etwa geringer als die maximale Breite des lichten Querschnitts der Tasche 16 im Klemmprofilteil 8, wie sie in Höhe des Bodenschenkels 11 gegeben ist. Dies sichert in Verbindung der Abmessung der Teile, hinsichtlich der ausdrücklich auf Fig. 3 verwiesen wird, daß sich das Klemmprofilteil 8 beim Einführen des Steckteils 21 der Abschlußprofilleiste 20 frei verformen kann und genügend Ausgleichsspiel beläßt. Bevorzugt ist in diesem Zusammenhang, daß das Klemmprofilteil 8 nur im Bereich der Rastansätze 12,13 in Eingriff mit den Wänden der Haltetasche 7 steht, d.h. gewissermaßen frei eingehängt ist.

Der Abdeckteil 22 der Abschlußprofilleiste 20 übergreift die Haltetasche 7, schließt außenseitig mit der Außenfläche des Wandteils 2 des Außenrahmens 1 ab und steht einwärts über den Winkelsteg 6 vor, so daß er zusammen mit dem Widerlagersteg 17 eine nutförmige Tasche für die Randabstützung der Trägerscheiben 18,19 bildet.

Bei der Ausführung nach Fig. 1 ist die Rückseite des Leuchtkastens durch eine Rückwand 23 verschlossen, die durch Schrauben festlegbar ist, welche in eine Längsnut 24 im Formansatz 4 einschraubbar sind. Im Innern des Leuchtkastens sind eine oder mehrere Leuchtstoffröhren untergebracht, die sich zusammen mit den zugehörigen Schaltungsbauteilen an der Rückwand 23 abstützen können. Zur Abstützung können jedoch auch Stege 25,26 verwendet werden, die sich parallel zum Wandteil 2 erstrecken und am Winkelsteg 6 bzw. Formansatz 4 angeformt sind.

Bei der in Fig. 2 veranschaulichten doppelseitigen Ausführung des Leuchtkastens begrenzt auch der rückseitige Längsrandbereich 5' des Wandteils 2 mit einem entsprechenden Winkelsteg 6' eine rückseitig offene Haltetasche 7', die mit einer entsprechenden Abschlußprofilleiste 20 eine Randabstützung gleicher Art für rückseitige Trägerscheiben 18',19' bildet. Bevorzugt ist das Querschnittsprofil des Außenrahmens 1 zu einer zu den Längsrändern des Wandteils 2 parallelen, gedachten Mittelebene 27 symmetrisch.

Zur Abstützung von Leuchtstoffröhren ist der Wandteil 2 innenseitig mit weiteren längslaufenden Stegen 28 versehen.

**Patentansprüche**

1. Leuchtkasten für Diapositive od. dgl. mit einem transparente Trägerscheiben abstützenden Außenrahmen, dessen Querschnittsprofil einen dünnen Wandteil als Umfangsbegrenzung des Kastens und an dessen Innenseite längslaufende Formansätze umfaßt, **dadurch gekennzeichnet,** daß zumindest der vordere Längsrandbereich (5) des Wandteils (2) mit einem sich innenseitig längs diesem erstreckende Winkelsteg (6) eine vorderseitig offene Haltelasche (7) begrenzt, in der Haltelasche (7) ein sich zumindest über einen Teil der Taschenlänge erstreckendes, annähernd U-förmiges, elastisch verformbares Klemmprofilteil (8) angeordnet und eine Abschlußprofilleiste (20) vorgesehen ist, die einen im Klemmprofilteil in der Haltetasche festlegbaren Steckteil (21) und einen zu diesem quergerichteten, die Haltelasche übergreifenden, einwärts über den Winkelsteg überstehenden Abdeckteil (22) umfaßt, der mit einem vom Winkelsteg einwärts vorspringenden Widerlagersteg (17) eine nutförmige Randabstützung für die Trägerscheiben (18,19) bildet.

2. Leuchtkasten nach Anspruch 1, dadurch gekennzeichnet,
daß auch der rückseitige Längsrandbereich (5') des Wandteils (2) mit einem entsprechenden Winkelsteg (6') eine rückseitig offene Haltetasche (7') begrenzt, die mit einer entsprechenden Abschlußprofilleiste (20) ebenfalls eine Randabstützung für Trägerscheiben (18',19') bildet.

3. Leuchtkasten nach Anspruch 2, dadurch gekennzeichnet,
daß das Querschnittsprofil des Außenrahmens (1) zu einer zu den Längsrändern des Wandteils (2) parallelen, gedachten Mittelebene (27) symmetrisch ist.

4. Leuchtkasten nach einem der Ansprüche 1-3, dadurch gekennzeichnet, daß in den einander parallel gegenüberliegenden Wänden der Haltetasche (7) einander gegenüberliegende Längsnuten (14,15) vorgesehen sind und das Klemmprofilteil (8) an der Außenseite der freien Ränder seiner Seitenschenkel (9,10) mit längslaufenden Rastansätzen (12,13) versehen ist.

5. Leuchtkasten nach Anspruch 4, dadurch gekennzeichnet, daß die Längsnuten und die Rastansätze einen etwa halbkreisförmigen Querschnitt aufweisen.

6. Leuchtkasten nach einem der Ansprüche 1 bis 5, dadurch gekennzeichnet, daß die Seitenschenkel (9,10) des Klemmprofilteils (8) im Querschnitt bogenförmig einwärts gewölbt sind und mit dem Bodenschenkel (11) ihrerseits eine Tasche (16) begrenzen, deren lichter Querschnitt sich von der Eintrittsöffnung in Höhe der Rastansätze (12,13) zum Bodenschenkel (11) hin zunächst verengt und dann wieder erweitert.

7. Leuchtkasten nach einem der Ansprüche 1 bis 6, dadurch gekennzeichnet, daß der Steckteil (21) der Abschlußprofilleiste (20) eine sich vom Abdeckteil (22) zu seinem freien Ende hin ansteigende Dicke aufweist.

8. Leuchtkasten nach Anspruch 7, dadurch gekennzeichnet, daß die maximale Dicke des Steckteils (21) der Abschlußprofilleiste (20) etwas geringer ist als die maximale Breite des lichten Querschnitts der Tasche (16) des Klemmprofilteils in Höhe dessen Bodenschenkels (11).

9. Leuchtkasten nach einem der Ansprüche 1 bis 8, dadurch gekennzeichnet, daß das Klemmprofilteil (8) lediglich im Bereich seiner Rastansätze (12,13) mit den Wänden der Haltetasche (7) in Eingriff ist.

## Claims

1. A light box for transparencies or the like having an outer frame supporting transparent carrier plates and the cross-sectional profile of which comprises a thin wall part as a peripheral boundary for the box and shaped projections extending along the inside thereof, characterised in that at least the front longitudinal marginal portion (5) of the wall part (2) comprises an angled web (6) extending along its inside face, defining a retaining pocket (7) which is open at the front and in which there is disposed an approximately U-shaped elastically deformable clamping profile member (8) which extends over at least a part of the length of the pocket and in that a profiled sealing strip (20) is provided which comprises a push-in part (21) which can be fixed in the retaining pocket in the clamping profile part and, directed transversely thereto, a masking part (22) which projects inwardly beyond the angled web and which, together with a support web (17) projecting inwardly from the angled web, forms a marginal support for the carrier plates (18, 19).

2. A light box according to claim 1, characterised in that also the rear longitudinal marginal portion (5') of the wall part (2) has a corresponding angled web (6') to define a rearwardly open retaining pocket (7') which, together with a corresponding profile sealing strip (20), likewise forms a marginal support for the carrier plates (18', 19').

3. A light box according to claim 2, characterized in that the cross-sectional profile of the outer frame (1) is symmetrical with an imaginary central plane (27) parallel with the longitudinal edges of the wall part (2).

4. A light box according to one of claims 1 to 3, characterised in that there are in the mutually parallel and oppositely disposed walls of the retaining pocket (7) mutually opposite longitudinal grooves (14, 15), and in that the clamping profile member (8) is provided on the outside of the free edges of its lateral members (9, 10) with longitudinally extending projections (12, 13).

5. A light box according to claim 4, characterized in that the longitudinal grooves and the catch projections have a substantially semi-circular cross-section.

6. A light box according to one of claims 1 to 5, characterized in that the lateral members (9, 10) of the clamping profile member (8) are in cross-section arcuately and inwardly curved, their bottom member (11) defining a pocket (16) the inside cross-section of which narrows from the inlet aperture at the level of the catch projections (12, 13) to the bottom member (11) and then widens out again.

7. A light box according to one of claims 1 to 6, characterised in that the push-in part (21) of the profiled sealing strip (20) is of a thickness which increases from the masking part (22) to its free end.

8. A light box according to claim 7, characterized in that the maximum thickness of the push-in part (21) of the profiled sealing strip (20) is somewhat smaller than the maximum width of the inside cross-section of the pocket (16) of the clamping profile member at the level of its bottom member (11).

9. A light box according to one of claims 1 to 8, characterised in that the clamping profile member (8) engages the walls of the retaining pocket (7) only in the region of its catch projections (12, 13).

**Revendications**

1. Boîte à lumière pour diapositives ou objets analogues, comportant un cadre extérieur supportant des verres de montage transparents, dont le profil en coupe transversale comprend une partie de paroi mince servant de délimitation périphérique de la boîte et des saillies profilées longitudinales à sa face intérieure, caractérisée en ce qu'au moins le domaine (5) du bord longitudinal antérieur de la partie de paroi (2) délimite, par une cornière (6) qui s'étend intérieurement le long de celui-ci, un logement de retenue (7) ouvert vers l'avant dans lequel est disposé un profilé de serrage (8) élastiquement déformable, approximativement en U, s'étendant au moins sur une partie de la longueur du logement, et qu'est prévu un profilé de fermeture (20) qui comporte une partie d'enfichage (21) pouvant être fixée dans le profilé de serrage présent dans le logement de retenue et une partie de coiffage (22) perpendiculaire à la partie d'enfichage, chevauchant le logement de retenue et se prolongeant vers l'intérieur au-delà de la cornière, qui, avec une lèvre d'appui (17) faisant saillie vers l'intérieur à partir de la cornière, forme un support marginal en forme de rainure pour les verres de montage (18, 19).

2. Boîte à lumière suivant la revendication 1, caractérisée en ce que le domaine (5') du bord longitudinal postérieur de la partie de paroi (2) délimite également, par une cornière (6') correspondante, un logement de retenue (7') ouvert vers l'arrière qui, avec un profilé de fermeture (20) correspondant, forme également un support marginal pour des verrez de montage (18', 19').

3. Boîte à lumière suivant la revendication 2, caractérisée en ce que le profil en coupe transversale du cadre extérieur (1) est symétrique par rapport à un plan médian imaginaire (27) parallèle à un des bords longitudinaux de la partie de paroi (2).

4. Boîte à lumière suivant l'une quelconque des revendications 1 à 3, caractérisée en ce que, dans les parois opposées parallèlement l'une à l'autre du logement de retenue (7), sont prévues des rainures longitudinales opposées (14, 15) et le profilé de serrage (8) est pourvu de saillies d'arrêt longitudinales (12, 13) sur la face externe des bords libres de ces ailes latérales (9, 10).

5. Boîte à lumière suivant la revendication 4, caractérisée en ce que les rainures longitudinales et les saillies d'arrêt ont une section transversale à peu près semi-circulaire.

6. Boîte à lumière suivant l'une quelconque des revendications 1 à 5, caractérisée en ce que les ailes latérales (9, 10) du profilé de serrage (8) s'incurvent vers l'intérieur en arc de cercle, en coupe transversale, et délimitent avec leur âme inférieure (11), pour leur part, un logement (16) dont la section transversale libre va initialement en se rétrécissant à partir de l'orifice d'entrée situé à hauteur des saillies d'arrêt (12, 13) en direction de l'âme inférieure (11), puis s'élargit à nouveau.

7. Boîte à lumière suivant l'une quelconque des revendications 1 à 6, caractérisée en ce que la partie d'enfichage (21) du profilé de fermeture (20) présente une épaisseur allant en augmentant depuis la partie de coiffage (22) vers son extrémité libre.

8. Boîte à lumière suivant la revendication 7, caractérisée en ce que l'épaisseur maximale de la partie d'enfichage (21) du profilé de fermeture (20) est légèrement inférieure à la largeur maximale de la section transversale libre du logement (16) du profilé de serrage, à hauteur de son âme inférieure (11).

9. Boîte à lumière suivant l'une quelconque des revendications 1 à 8, caractérisée en ce que le profilé de serrage (8) n'attaque les parois du logement de retenue (7) que dans le domaine de ses saillies d'arrêt (12, 13).

Fig.2

Fig.1

Fig. 3